# EUROPEAN PATENT APPLICATION

(11) **EP 4 822 982 A1**
(43) Date of publication of application: **14.10.2026**
(21) Application number: 24931806.4
(22) Date of filing: 05.07.2024
(51) Int. Cl.: H02S 50/00, H02S 10/20, G01W 1/10, G06F 3/14, H02J 7/00, H02J 7/35

(54) **METHOD AND DEVICE FOR CONTROLLING SOLAR POWER GENERATION SYSTEM ACCORDING TO WEATHER CONDITIONS**

(30) Priority: 25.03.2024 KR 20240040659
(71) Applicant: Hanwha Solutions Corporation, Jung-gu Seoul 04541 (KR)
(72) Inventor: MUN, Chang Yong, Seoul 04541 (KR); KIM, Kyung Min, Seoul 04541 (KR)
(74) Representative: Mooser, Sebastian Thomas
(86) International application number: PCT/KR2024/009559
(87) International publication number: WO 2025/206471

(57) **Abstract**

The present disclosure relates to a method and apparatus for controlling a solar power system based on weather conditions. The method of controlling a solar power system based on weather conditions includes: determining whether bad weather will occur, based on weather information of a region where the solar power system is located; determining a minimum charging amount of a battery when the bad weather is predicted to occur; and controlling operation of at least one photovoltaic module such that an amount of power greater than or equal to the minimum charging amount is charged to the battery.

## Description

### Technical Field

The present disclosure relates to a method and apparatus for controlling a solar power system based on weather conditions, and more specifically, to a method and apparatus for determining a minimum battery charging amount based on information about bad weather and determining a supply path for electricity to be supplied to at least one load.

### Background Art

Solar power generation is a power generation technology that can produce electricity while generating little pollution through the process of collecting energy directly from the sun and converting the energy into electricity. Therefore, solar power generation is a sustainable energy that is gaining attention as a type of eco-friendly power generation and is growing rapidly.

Meanwhile, most electrical energy production emits greenhouse gases and other air pollutants generated during the burning of fossil fuels, which are major causes of climate change and air pollution. Therefore, the consumer culture of using electricity efficiently and the consumption of electric energy through self-generation such as solar power generation can provide many benefits to the environment, economy, and society.

The above-mentioned background technology is technical information that the inventor possessed for deriving the present disclosure or acquired in the process of deriving the present disclosure, and cannot necessarily be said to be known art disclosed to the general public before the filing of the present disclosure.

### Detailed Description of Invention

### Technical Problem

The present disclosure provides a method and apparatus for controlling a solar power system based on weather conditions. The problem to be solved by the present disclosure is not limited to the problems mentioned above, and other problems and advantages of the present disclosure that are not mentioned may be understood from the following description, and more clearly by examples of the present disclosure. In addition, it can be seen that the problems and advantages to be solved by the present disclosure may be realized by the means and combinations thereof indicated in the patent claims.

### Technical Solution

To achieve the technical objective described above, according to a first aspect of the present disclosure, there is provided a method of controlling a solar power system based on weather conditions, the method including: determining whether bad weather will occur, based on weather information of a region where the solar power system is located; determining a minimum charging amount of a battery when the bad weather is predicted to occur; and controlling operation of at least one photovoltaic module such that an amount of power greater than or equal to the minimum charging amount is charged to the battery.

According to a second aspect of the present disclosure, there is provided an apparatus for controlling a solar power system based on weather conditions, the apparatus including: a memory in which at least one program is stored; a processor configured to perform calculations by executing the at least one program, wherein the processor is configured to determine whether bad weather will occur, based on weather information of a region where the solar power system is located, and when the bad weather is predicted to occur, determine a minimum charging amount of the battery, and charge the battery with an amount of power greater than or equal to the minimum charging amount.

According to a third aspect of the present disclosure, there is provided a computer-readable recording medium storing a program for executing the method according to the first aspect may be provided.

In addition, another method for implementing the present disclosure, another system, and a computer-readable recording medium storing a computer program for executing the method may be further provided.

Other aspects, features and advantages in addition to those described above will become apparent from the following drawings, claims and detailed description of the present disclosure.

### Effects of Invention

According to the means for achieving the objective of the present disclosure described above, in the present disclosure, it is possible to prevent electrical discharges due to bad weather by receiving weather information, selecting information about bad weather, and determining the minimum charging amount of a battery based on the information about bad weather.

Additionally, in the present disclosure, efficient power consumption may be possible by determining a power supply path from a battery or grid according to the required amount of power of at least one load.

In addition, according to the present disclosure, user experience may be improved by providing the consumption status of electric energy users through a highly visible interface.

The effects of the embodiments are not limited to the effects described above, and other effects not mentioned will be clearly understood by those skilled in the art from the description of the present disclosure.

### Brief Description of the Drawings

FIG. 1 is a conceptual diagram illustrating a method of controlling a solar power system based on weather conditions, according to an embodiment.
FIG. 2 is a block diagram of a user terminal according to an embodiment.
FIG. 3 is a structural diagram of a system including a user terminal and an external device, according to an embodiment.
FIG. 4 is a flowchart illustrating a method of controlling a solar power system based on weather conditions, according to an embodiment.
FIG. 5 is a diagram illustrating a method of determining a minimum charging amount of a battery based on bad weather information, according to an embodiment.
FIG. 6 is a flowchart illustrating a method of controlling power supply according to a required amount of power of at least one load, according to an embodiment.
FIG. 7 is a diagram of a screen displayed on a user terminal, according to an embodiment.

### Best Mode

The present disclosure relates to a method and apparatus for controlling a solar power system based on weather conditions. According to an embodiment of the present disclosure, a method of controlling a solar power system based on weather conditions may include: determining whether bad weather will occur, based on weather information of a region where the solar power system is located; determining a minimum charging amount of a battery when the bad weather is predicted to occur; and controlling operation of at least one photovoltaic module such that an amount of power greater than or equal to the minimum charging amount is charged to the battery.

### Embodiments of Invention

The advantages and features of the present disclosure and methods for achieving them will become clear by referring to the embodiments described in detail together with the accompanying drawings. However, the present disclosure is not limited to the embodiments presented below, but may be implemented in various different forms, and should be understood to include all conversions, equivalents, and substitutes included in the spirit and technical scope of the present disclosure. The embodiments presented below are provided to ensure that the present disclosure is complete and to fully inform those skilled in the art of the scope of the present disclosure. In describing the present disclosure, if it is determined that a detailed description of related known technologies may obscure the gist of the present disclosure, the detailed description will be omitted.

The terms used in this application are only used to describe specific embodiments and are not intended to limit the present disclosure. Singular expressions include plural expressions unless the context clearly dictates otherwise. In this application, terms such as "comprise" or "have" are intended to designate the presence of features, numbers, steps, operations, components, parts, or combinations thereof described in the specification, but are not intended to indicate the presence of one or more other features. It should be understood that this does not exclude in advance the possibility of the existence or addition of elements, numbers, steps, operations, components, parts, or combinations thereof.

Some embodiments of the present disclosure may be represented by functional block configurations and various processing steps. Some or all of these functional blocks may be implemented in various numbers of hardware and/or software configurations that perform specific functions. For example, the functional blocks of the present disclosure may be implemented by one or more microprocessors or by circuit configurations for certain functions. Additionally, for example, functional blocks of the present disclosure may be implemented in various programming or scripting languages. Functional blocks may be implemented as algorithms running on one or more processors. Additionally, the present disclosure may employ conventional technologies for electronic environment setup, signal processing, and/or data processing. Terms such as "mechanism," "element," "means," and "configuration" may be used broadly and are not limited to mechanical and physical configurations.

Additionally, connection lines or connection members between components illustrated in the drawings merely exemplify functional connections and/or physical or circuit connections. In an actual device, connections between components may be represented by various replaceable or additional functional connections, physical connections, or circuit connections.

Hereinafter, the present disclosure will be described in detail with reference to the attached drawings.

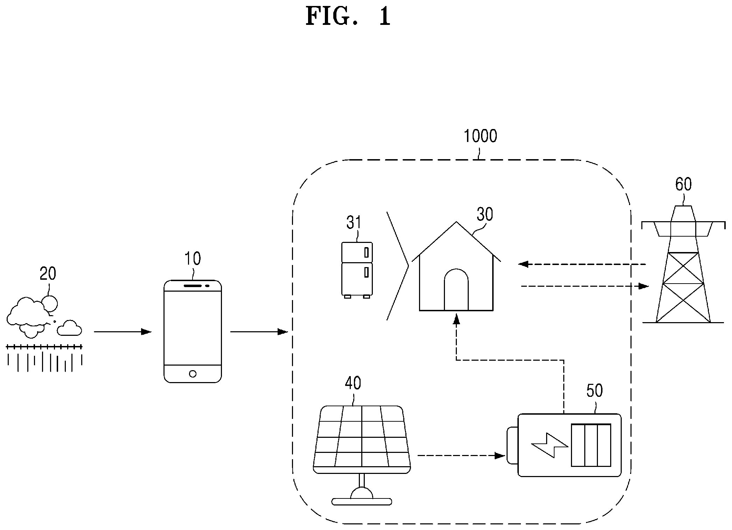

FIG. 1 is a conceptual diagram illustrating a method of controlling a solar power system based on weather conditions, according to an embodiment.

A user terminal 10 may include a smartphone, smart pad, and/or tablet PC. The user terminal 10 may include personal computers such as desktops and laptops. The user terminal 10 may include, but is not limited to, smart accessories such as a smartwatch and/or a head-mounted device (HMD).

Referring to FIG. 1, the user terminal 10 may obtain, from an external server, weather information 20 of a region where the solar power system 1000 is located. For example, weather information 20 may include weather information 20 by date/hour, precipitation, amount of snowfall, wind strength, wind direction, sunrise time, sunset time, air quality, concentration of fine dust, and amount of sunlight, but is not limited thereto.

The user terminal 10 may control the solar power system 1000. For example, the solar power system 1000 may include at least one photovoltaic module (PV Module) 40, a battery 50, and a power consumer 30, but is not limited thereto. The photovoltaic module 40 refers to a device that produces power through solar energy. Additionally, the battery 50 refers to a device that stores power produced by the photovoltaic module 40. Additionally, the power consumer 30 refers to a place that includes an object that consumes power.

The solar power system 1000 may receive power from a grid 60. The grid 60 refers to an infrastructure that receives power produced by solar power generation or supplies the power to the power consumer 30 when the power produced by solar power generation is insufficient.

The power consumer 30 may include at least one load 31. Here, the load 31 refers to an object that consumes power. For example, the load 31 may include, but is not limited to, home appliances such as washing machines and refrigerators.

The user terminal 10 may control the solar power system 1000 based on the weather information 20 received from an external server. For example, the user terminal 10 may determine, based on the weather information 20, whether bad weather has occurred. Additionally, when bad weather is predicted to occur, the user terminal 10 may determine a minimum charging amount (Backup SoC) of the battery 50.

For example, bad weather may include, but is not limited to, typhoons, floods, strong winds, ice storms, thunderstorms, snowfall, and rainfall.

Conventionally, the minimum charging amount of the battery 50 is maintained constant without considering weather conditions, and thus when the solar power system 1000 is not operated due to rainfall or snowfall, there may be situations where the battery 50 is discharged and the load 31 is not able to consume power.

However, when the occurrence of bad weather is predicted based on the weather information 20, the user terminal 10 may increase the minimum charging amount of the battery 50 compared to usual, so as to prevent electrical discharges even when power is not produced in the photovoltaic module 40 according to the bad weather.

For example, when the occurrence of bad weather is predicted, the user terminal 10 may determine the minimum charging amount of the battery 50 based on at least one of the type of bad weather, the duration of bad weather, the intensity of bad weather, and a power consumption pattern of the load 31.

Additionally, the user terminal 10 may determine the amount of power to be supplied from the battery 50 to the load 31, based on a required amount of power of the load 31. For example, the user terminal 10 may determine an amount of power to be supplied to the load 31 and a supply path of the power to be supplied to the load 31, based on the required amount of power of the load 31, the minimum charging amount of the battery 50, and a current charging amount of the battery 50.

Additionally, the user terminal 10 may generate an interface that displays the determined minimum charging amount and provide the interface to the user. Additionally, the user terminal 10 may generate an interface that displays at least one of an expected start time, an expected end time, and a type of bad weather and provide the interface to the user a predetermined time prior to the expected start time of bad weather.

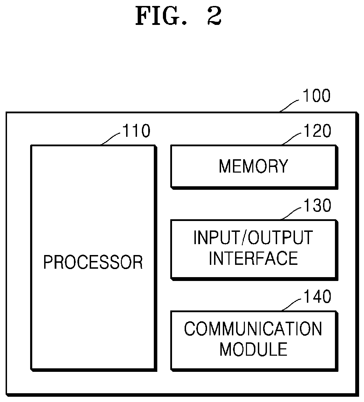

FIG. 2 is a block diagram of a user terminal according to an embodiment.

Referring to FIG. 2, a user terminal 100 includes a processor 110, a memory 120, an input/output interface 130, and a communication module 140. For convenience of description, only components related to the present disclosure are illustrated in FIG. 2. Accordingly, in addition to the components illustrated in FIG. 2, other general-purpose components may be further included in the user terminal 100. In addition, it is obvious to those of ordinary skill in the art that the processor 110, the memory 120, the input/output interface 130, and the communication module 140 illustrated in FIG. 2 may be implemented as independent devices.

The processor 110 may process computer program instructions by performing basic arithmetic, logic, and input/output operations. Here, a command may be provided from the memory 120 or an external device. Additionally, the processor 110 may generally control the operations of other components included in the user terminal 100.

For example, the processor 110 may determine whether bad weather will occur, based on the weather information 20 of a region where the solar power system 1000 is located. For example, the processor 110 may select the weather information 20 that meets preset criteria for bad weather among the weather information 20.

Additionally, when bad weather is predicted to occur, the processor 110 may determine a minimum charging amount of the battery 50 that stores power produced by the photovoltaic module 40. For example, when bad weather is predicted to occur, the processor 110 may increase the minimum charging amount of the battery 50 from the existing minimum charging amount in preparation for a situation in which the photovoltaic module 40 is not able to produce power during the bad weather period.

Additionally, the processor 110 may control the operation of the photovoltaic module 40 such that the battery 50 is charged with an amount of power equal to or greater than the determined minimum charging amount. For example, when the minimum charging amount is 60%, the processor 110 may control the photovoltaic module 40 to charge power in the battery 50 until the amount of power charged in the battery 50 is 60% or more.

Additionally, the processor 110 may generate an interface that displays the minimum charging amount. Additionally, the processor 110 may generate an interface that displays at least one of the expected start time, expected end time, and type of bad weather. Additionally, the processor 110 may provide the generated interface to the user a predetermined time prior to the expected start time of bad weather.

The user may receive information about bad weather in advance a predetermined time from the expected start time of bad weather, and thus may recognize bad weather in advance and prevent electrical discharges.

In addition, the processor 110 may control, based on the required amount of power of at least one load 31 of the power consumer 30, the amount of power supplied to the load 31 and the supply path of the power supplied to the load 31.

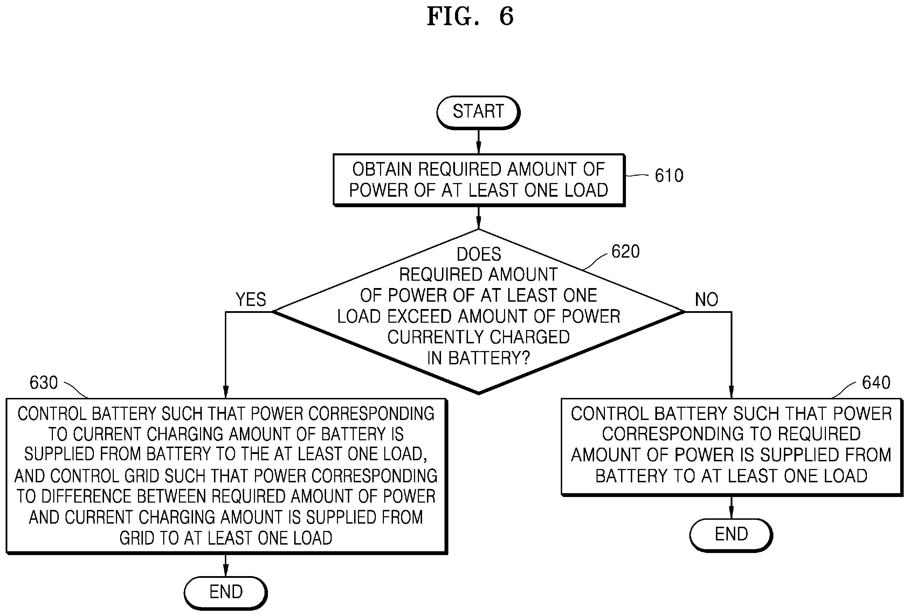

Hereinafter, a method of determining and controlling a power supply path will be described in detail with reference to FIG. 6.

The processor 110 may be implemented as an array of multiple logic gates, or as a combination of a general-purpose microprocessor and a memory storing a program that can be executed on the microprocessor. For example, the processor 110 may include a general-purpose processor, a central processing unit (CPU), a microprocessor, a digital signal processor (DSP), a controller, a microcontroller, a state machine, etc. In some circumstances, the processor 110 may include an application specific integrated circuit (ASIC), a programmable logic device (PLD), a field programmable gate array (FPGA), etc. For example, the processor 110 may refer to a combination of processing devices such as a combination of a digital signal processor (DSP) and a microprocessor, a combination of a plurality of microprocessors, a combination of one or more microprocessors combined with a digital signal processor (DSP) core, or a combination of any other such configurations.

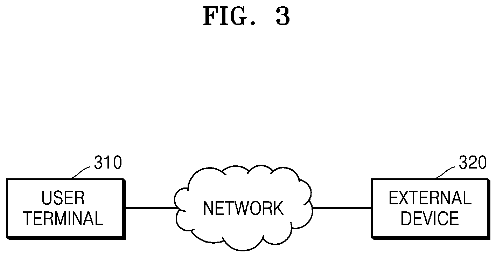

The memory 120 may include any non-transitory computer-readable recording medium. As an example, the memory 120 may include a non-permanent mass storage device such as random access memory (RAM), read only memory (ROM), disk drive, solid state drive (SSD), flash memory, etc. As another example, the non-permanent mass storage devices such as ROM, SSD, flash memory, disk drives, etc. may be a separate permanent storage device distinct from a memory. Additionally, the memory 120 may store an operating system (OS) and at least one program code (e.g., code for the processor 110 to perform operations to be described later with reference to FIGS. 3 to 7).

These software components may be loaded from a computer-readable recording medium separate from the memory 120. The recording medium readable by this separate computer may be a recording medium that can be directly connected to the user terminal 100, and may include, for example, a computer-readable recording medium that is readable on an input/output computer, such as a floppy drive, disk, tape, DVD/CD-ROM drive, or memory card. Alternatively, software components may be loaded into the memory 120 through the communication module 140 rather than a computer-readable recording medium. For example, at least one program may be loaded onto the memory 120 based on a computer program installed by files provided through the communication module 140 by developers or a file distribution system for distributing installation files of applications (e.g., a computer program for executing operations which are to be executed by the processor 110 and to be described with reference to FIGS. 3 to 7).

The input/output interface 130 may be a means for interfacing with a device for input and/or output (e.g., keyboard, mouse, etc.), which may be connected to the user terminal 100 or included in the user terminal 100. In FIG. 2, the input/output interface 130 is illustrated as a separate element from the processor 110, but the present disclosure is not limited thereto, and the input/output interface 130 may be included in the processor 110. For example, the processor 110 may change the charging amount of the battery 50, input through the input/output interface 130, to a minimum charging amount of the battery 50.

The communication module 140 may provide a configuration or function for the user terminal 100 to communicate with an external device (not shown) through a network. Additionally, the communication module 140 may provide a configuration or function for the user terminal 100 to communicate with other external devices. For example, control signals, commands, data, etc. provided under the control by the processor 110 may be transmitted to an external device through the communication module 140 and a network.

Additionally, although not illustrated in FIG. 2, the user terminal 100 may include a display module. For example, the user terminal 100 may display an interface generated to include at least one of the minimum charging amount of the battery 50 and information about bad weather and provide the interface to the user through the display module.

FIG. 3 is a structural diagram of a system including a user terminal and an external device, according to an embodiment.

Referring to FIG. 3, a user terminal 310 may include all types of servers that manage web and/or apps that provide artificial intelligence services. Additionally, the user terminal 310 of FIG. 3 may be the same device as the user terminal 10 of FIG. 1 and/or the user terminal 100 of FIG. 2.

An external device 320 refers to an entity that provides information necessary for the user terminal 310 to generate a virtual work environment. The external device 320 may include all types of servers that manage various types of information. The external device 320 may include a database and may include a server that manages a web service API (Application Programming Interface) that can provide information, but is not limited thereto. For example, the external device 320 may correspond to a server that provides weather information 20. Additionally, the external device 320 may correspond to a database that stores criteria for assigning weights to bad weather information to determine the minimum charging amount of the battery 50. Additionally, the external device 320 may correspond to a database that stores a power consumption pattern of at least one load 31 of the power consumer 30.

The user terminal 310 and the external device 320 may communicate with each other and/or other devices through a network. A network is a comprehensive data communication network that allows different entities to communicate smoothly with each other, and may include wired Internet, wireless Internet, and mobile wireless communication networks. For example, the network may include a local area network (LAN), a wide area network (WAN), a value added network (VAN), a mobile radio communication network, a satellite communication network, and a combination thereof. In addition, wireless communications may include, for example, wireless LAN (Wi-Fi), Bluetooth, Bluetooth low energy, ZigBee, WFD (Wi-Fi Direct), UWB (ultrawideband), infrared communication (IrDA, Infrared Data Association), NFC (Near Field Communication), etc., but are not limited thereto.

The user terminal 310 may communicate with the external device 320 through a network. The user terminal 310 may receive data from the external device 320 by performing communication through a network and provide a response based on the received data.

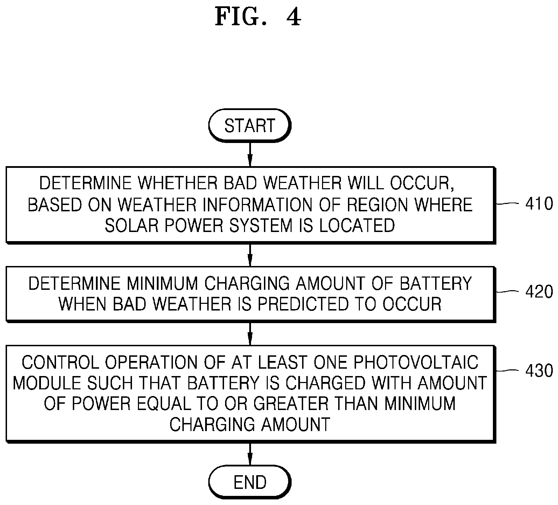

FIG. 4 is a flowchart illustrating a method of controlling a solar power system based on weather conditions, according to an embodiment.

Referring to FIG. 4, the method of controlling the solar power system 1000 based on weather conditions may include operations processed in time series by the user terminal 100 and/or the processor 110 illustrated in FIG. 2. Therefore, even when details are omitted below, those details described above regarding the user terminal 100 or the processor 110 illustrated in FIG. 2 may also be applied to the method of controlling the solar power system 1000 based on weather conditions, illustrated in FIG. 4.

In operation 410, the processor 110 may determine whether bad weather has occurred, based on weather information 20 of the region where the solar power system 1000 is located.

For example, the weather information 20 may include weather information 20 by date/hour. Additionally, the weather information 20 may include, but is not limited thereto, precipitation, amount of snowfall, wind strength, wind direction, sunrise time, sunset time, air quality, concentration of fine dust, and amount of sunlight.

For example, the processor 110 may select information that is determined to be bad weather from among the weather information 20 of the region where the solar power system 1000 is located. For example, bad weather may include, but is not limited to, typhoons, floods, strong winds, ice storms, thunderstorms, snowfall, and rainfall.

For example, when the amount of precipitation exceeds a predetermined threshold during a predetermined period, the processor 110 may determine that bad weather has occurred during that predetermined period. Additionally, when the wind strength exceeds a predetermined threshold during a predetermined period, the processor 110 may determine that bad weather has occurred during that predetermined period. Additionally, when the amount of snowfall exceeds a predetermined threshold during a predetermined period, the processor 110 may determine that bad weather has occurred during that predetermined period.

In operation 420, the processor 110 may determine a minimum charging amount of the battery 50 when bad weather is predicted to occur.

For example, the processor 110 may determine the minimum charging amount of the battery 50 based on at least one of the type of bad weather, the duration of the bad weather, the intensity of the bad weather, and the power consumption pattern of the at least one load 31.

For example, the processor 110 may assign weights to the type of bad weather, the duration of bad weather, the intensity of bad weather, and the power consumption pattern of the at least one load 31, respectively, according to preset criteria, and determine the minimum charging amount of the battery 50 by adding up the respective weights.

Additionally, after the bad weather ends, the minimum charging amount determined according to the bad weather may be changed to the minimum charging amount before the bad weather started. For example, when the minimum charging amount is increased according to bad weather, the efficiency of power use may be reduced when the minimum charging amount is maintained even after the bad weather ends. Accordingly, the processor 110 may change the minimum charging amount of the battery 50 back to the existing minimum charging amount after the bad weather ends, thereby enabling efficient power use.

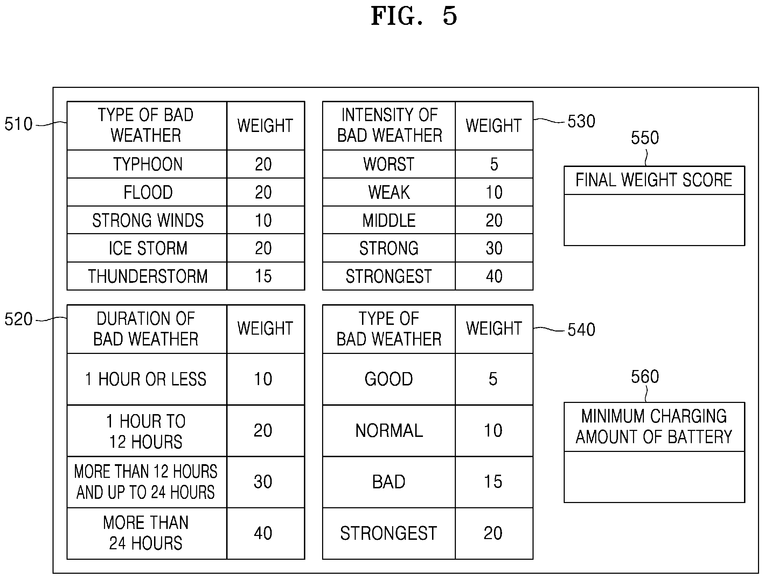

Hereinafter, a method of determining the minimum charging amount of the battery 50 will be described in detail with reference to FIG. 5.

FIG. 5 is a diagram illustrating a method of determining a minimum charging amount of a battery based on bad weather information, according to an embodiment.

Referring to FIG. 5, the processor 110 may calculate a final weight score 550 for determining a minimum charging amount 560 of the battery 50 based on a plurality of preset criteria 510, 520, 530, and 540. The processor 110 may determine the minimum charging amount 560 of the battery 50 based on the calculated final weight score 550.

For example, the processor 110 may calculate a first weight score based on a preset criterion 510 for the type of bad weather. For example, when the type of bad weather corresponds to a typhoon, the processor 110 may calculate the first weight score as 20.

Additionally, the processor 110 may calculate a second weight score based on a preset criterion 520 for the duration of bad weather. For example, when the duration of bad weather is less than 1 hour, the processor 110 may calculate the second weight score as 10.

Additionally, the processor 110 may calculate a third weight score based on a preset criterion 530 for the intensity of bad weather. For example, the processor 110 may calculate the third weight score as 20 when the intensity of bad weather is medium.

Additionally, the processor 110 may calculate a fourth weight score based on a preset criterion 540 for the power consumption pattern of the load 31. For example, the processor 110 may analyze the power consumption pattern of the at least one load 31 included in the power consumer 30. For example, when the power consumption of the load 31 is higher than an average power consumption of other power consumers 30 that use the solar power system 1000, the processor 110 may determine the power consumption pattern of the load 31 as worst or bad. When the power consumption of the load is higher than the average power consumption, the load 31 must have a higher minimum charging amount 560 of the battery 50 to prevent discharge of the battery 50.

The processor 110 may calculate the final weight score 550 by adding up the calculated weight scores. For example, the processor 110 may calculate the final weight score 550 by adding the first to fourth weight scores.

Additionally, the processor 110 may determine the minimum charging amount 560 of the battery 50 through the final weight score 550 based on a preset criterion.

Referring again to FIG. 4, in operation 430, the processor 110 may control operation of at least one photovoltaic module 40 such that the battery 50 is charged with an amount of power equal to or greater than the minimum charging amount.

In detail, the processor 110 may control at least one photovoltaic module 40 such that power produced by the at least one photovoltaic module 40 is supplied to the battery 50 in an amount greater than or equal to the minimum charging amount. For example, the processor 110 may obtain, in real time, the current amount of power charged in the battery 50. If the current amount of power of the battery 50 exceeds the minimum charging amount, the processor 110 may control the photovoltaic module 40 such that the photovoltaic module 40 does not supply power to the battery 50.

FIG. 6 is a flowchart illustrating a method of controlling power supply according to the required amount of power of at least one load 31, according to an embodiment.

Referring to FIG. 6, the method of controlling power supply according to the required amount of power of the at least one load 31 includes operations processed in time series by the user terminal 100 and/or processor 110 illustrated in FIG. 2. Therefore, even when details are omitted below, those details described above regarding the user terminal 100 or the processor 110 illustrated in FIG. 2 may also be applied to the method of controlling the power supply based on the required power amount of the at least one load 31, illustrated in FIG. 6.

In operation 610, the processor 110 may obtain the required amount of power of the at least one load 31.

For example, the processor 110 may obtain, at every predetermined cycle, the required amount of power of the at least one load 31 located in the power consumer 30. Additionally, the processor 110 may calculate the required amount of power of all loads 31 by adding up the required amount of power of the at least one load 31 located in the power consumer 30.

In operation 620, the processor 110 may determine whether the required amount of power of the at least one load 31 exceeds the amount of power currently charged in the battery 50.

In operation 630, when the required amount of power of the at least one load 31 exceeds the amount of power currently charged in the battery 50, the processor 110 may control the battery 50 such that power corresponding to the current charging amount of the battery 50 is supplied from the battery 50 to the at least one load 31. Additionally, the processor 110 may control the grid 60 such that power corresponding to a difference between the required amount of power and the current charging amount is supplied from the grid 60 to the at least one load 31.

In operation 640, when the required amount of power of the at least one load 31 does not exceed the amount of power currently charged in the battery 50, the processor 110 may control the battery 50 such that power corresponding to the required amount of power is supplied from the battery 50 to the at least one load 31.

If the photovoltaic module 40 fails to produce power due to bad weather, the processor 110 may supply power to the load 31 by efficiently using the power produced by the solar power system 1000 by using the power charged in the battery 50 to the maximum and using the power produced by the grid 60 to the minimum.

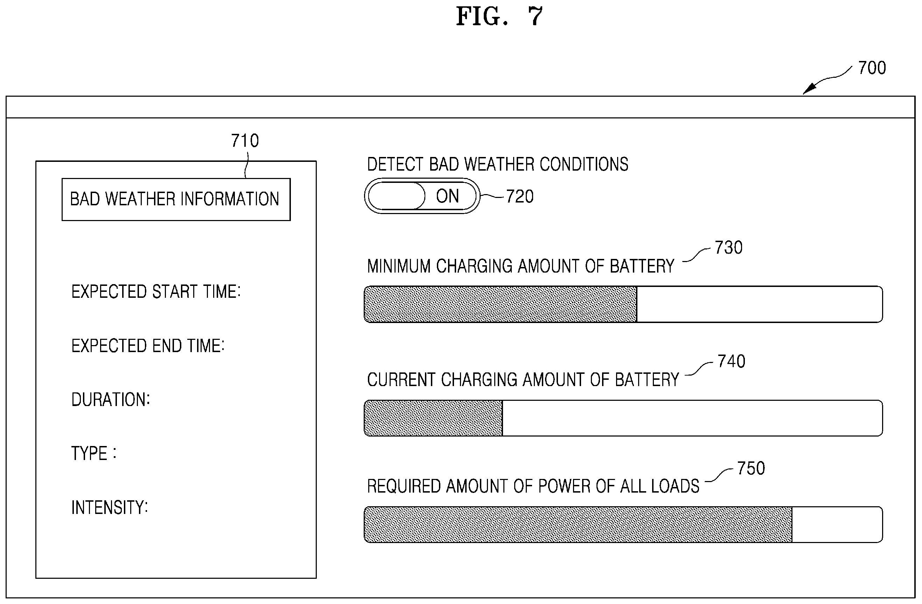

FIG. 7 is a diagram of a screen displayed on a user terminal, according to an embodiment.

Referring to FIG. 7, a screen 700 corresponds to an interface generated to display information about the solar power system 1000 according to bad weather.

Referring to the screen 700, when bad weather is predicted, the user terminal 10 may display bad weather information 710. For example, the user terminal 10 may display at least one of the expected start time, expected end time, duration, type, and intensity of bad weather. Accordingly, a user may recognize information about bad weather in advance and take countermeasures.

Additionally, the user terminal 10 may display whether a bad weather situation is detected (720). For example, when a command directing not to detect a bad weather situation is input through the user terminal 10, then even when the occurrence of bad weather is predicted, the user terminal 10 may not provide the user with information about the bad weather and also not change a minimum charging amount 730 of the battery 50.

Additionally, the user terminal 10 may display the minimum charging amount 730 of the battery 50 determined as the occurrence of bad weather is predicted. Specifically, the minimum charging amount 730 of the battery 50 may be displayed in the form of a bar. For example, the minimum charging amount 730 of the battery 50 may be displayed as a ratio to the maximum charging amount that may be charged in the battery 50.

Additionally, the user terminal 10 may display a current charging amount 740 of the battery 50. Specifically, the current charging amount 740 of the battery 50 may be displayed in the form of a bar. For example, the minimum charging amount 730 of the battery 50 may be displayed as a ratio to the maximum charging amount that may be charged in the battery 50.

Additionally, the user terminal 10 may display the required amount of power of all loads 31 located at the power consumer 30. Here, a required amount of power 750 of all loads 31 may be calculated by adding up the required amount of power of each load 31. Specifically, the required amount of power 750 of the entire load 31 may be displayed in the form of a bar. For example, the required amount of power 750 of all loads 31 may be displayed as a ratio to the maximum required amount of power of all loads 31, which is a sum of the maximum required amount of powers of each load 31.

Embodiments according to the present disclosure may be implemented in the form of a computer program that can be executed through various components on a computer, and such a computer program may be recorded on a computer-readable medium. The medium may include magnetic media such as hard disks, floppy disks, and magnetic tapes, optical recording media such as CD-ROMs and DVDs, magnetooptical media such as floptical disks, and hardware devices specifically configured to store and execute program instructions, such as ROM, RAM, flash memory, etc.

Meanwhile, the computer program may be specially designed and constructed for the present disclosure, or may be known and available to those skilled in the art of computer software. Examples of computer programs may include not only machine language code such as that created by a compiler, but also high-level language code that can be executed by a computer using an interpreter or the like.

According to an embodiment, methods according to various embodiments of the present disclosure may be included and provided in a computer program product. Computer program products are commodities and can be traded between sellers and buyers. The computer program product may be distributed in the form of a devicereadable storage medium (e.g. compact disc read only memory (CD-ROM)), or distributed directly or online (e.g., downloaded or uploaded) between two user devices through an application store (e.g. Play StoreTM). In the case of online distribution, at least a portion of the computer program product may be at least temporarily stored or temporarily generated in a machine-readable storage medium, such as a manufacturer's server, an application store's server, or a memory of a relay server.

Unless there is an explicit order or statement to the contrary regarding the steps constituting the method according to the present disclosure, the steps may be performed in any suitable order. The present disclosure is not necessarily limited by the order of description of the above steps. The use of any examples or illustrative terms ("e.g.", etc.) in the present disclosure is merely for explaining the present disclosure in detail, and unless limited by the claims, the scope of the present disclosure is limited by the examples or illustrative terms. Additionally, those skilled in the art will recognize that various modifications, combinations and changes may be made depending on design conditions and factors within the scope of the appended claims or their equivalents.

Therefore, the scope of the present disclosure is defined not by the embodiments described above, but by the claims and their equivalents, and all variations within the scope of the claims and their equivalents are to be construed as being included in the present disclosure.

## Claims

1. A method of controlling a solar power system based on weather conditions, the method comprising:
determining whether bad weather will occur, based on weather information of a region where the solar power system is located;
determining a minimum charging amount of a battery when the bad weather is predicted to occur; and
controlling operation of at least one photovoltaic module such that the battery is charged with an amount of power greater than or equal to the minimum charging amount.

2. The method of claim 1,
further comprising:
generating an interface displaying at least one of an expected start time of the bad weather, an expected end time of the bad weather, and a type of the bad weather; and
displaying the generated interface a predetermined time prior to the expected start time of the bad weather.

3. The method of claim 1, wherein
the determining of the minimum charging amount of the battery comprises
determining the minimum charging amount based on at least one of a type of the bad weather, a duration of the bad weather, an intensity of the bad weather, and a power consumption pattern of at least one load.

4. The method of claim 3, wherein
the determining of the minimum charging amount of the battery further comprises:
assigning weights to the type of bad weather, the duration of the bad weather, the intensity of the bad weather, and the power consumption pattern of the at least one load, respectively, according to preset criteria; and
determining the minimum charging amount by adding up the respective weights.

5. The method of claim 1, comprising
changing, after the end of the bad weather, the determined minimum charging amount to a minimum charging amount used before the start of the bad weather.

6. The method of claim 1,
further comprising
determining the amount of power to be supplied from the battery to at least one load included in the solar power system, based on the required amount of power of the at least one load.

7. The method of claim 6,
further comprising,
if the required amount of power exceeds a current charging amount of the battery,
controlling the battery such that power corresponding to the current charging amount is supplied from the battery to the at least one load, and controlling the grid such that power corresponding to a difference between the required amount of power and the current charging amount is supplied from the grid to the at least one load.

8. The method of claim 6,
further comprising,
when the current charging amount is greater than or equal to the required amount of power, controlling the battery such that power corresponding to the required amount of power is supplied from the battery to the at least one load.

9. The method of claim 1,
further comprising
generating an interface displaying the minimum charging amount.

10. A computing device for controlling operation of at least one photovoltaic module, the computing device comprising:
a memory in which at least one program is stored;
a processor configured to perform calculations by executing the at least one program,
wherein the processor is configured to
determine whether bad weather will occur, based on weather information of a region where the solar power system is located, and determine, when the bad weather is predicted to occur, a minimum charging amount of the battery, and charge the battery with an amount of power greater than or equal to the minimum charging amount.

11. The computing device of claim 11, wherein
the processor is configured to
generate an interface displaying at least one of an expected start time of the bad weather, an expected end time of the bad weather, and a type of the bad weather and display the generated interface a predetermined time prior to the expected start time of the bad weather.

12. The computing device of claim 10, wherein
the determining of the minimum charging amount of the battery comprises
determining the minimum charging amount based on at least one of a type of the bad weather, a duration of the bad weather, an intensity of the bad weather, and a power consumption pattern of at least one load.

13. The computing device of claim 12, wherein
the determining the minimum charging amount of the battery comprises assigning weights to the type of bad weather, the duration of the bad weather, the intensity of the bad weather, and the power consumption pattern of the at least one load, respectively, according to preset criteria, and determining the minimum charging amount by adding up the respective weights.

14. The computing device of claim 10, wherein
the processor is configured to
change, after the end of the bad weather, the determined minimum charging amount to a minimum charging amount used before the start of the bad weather.

15. The computing device of claim 10, wherein
the processor is configured to
determine the amount of power to be supplied from the battery to at least one load included in the solar power system, based on the required amount of power of the at least one load.

16. The computing device of claim 15, wherein
the processor is configured to,
if the required amount of power exceeds a current charging amount of the battery,
controlling the battery such that power corresponding to the current charging amount is supplied from the battery to the at least one load, and controlling the grid such that power corresponding to a difference between the required amount of power and the current charging amount is supplied from the grid to the at least one load.

17. The computing device of claim 15, wherein
the processor is configured to,
if the current charging amount is greater than or equal to the required amount of power, controlling the battery such that power corresponding to the required amount of power is supplied from the battery to the at least one load.

18. The computing device of claim 10, wherein
the processor is configured to
generate an interface indicating the minimum charging amount.

19. A computer-readable recording medium having recorded thereon a program for causing the method according to claim 1 to be executed.
